# EUROPEAN PATENT APPLICATION

(11) **EP 4 401 223 A1**
(43) Date of publication of application: **17.07.2024**
(21) Application number: 22944342.9
(22) Date of filing: 02.06.2022
(51) Int. Cl.: H01M 50/342, H01M 50/143

(54) **PRESSURE RELIEF APPARATUS, HOUSING, BATTERY CELL, BATTERY AND ELECTRICAL DEVICE**

(71) Applicant: Contemporary Amperex Technology Co., Limited, Ningde, Fujian 352100 (CN)
(72) Inventor: CHEN, Xiaobo, Ningde, Fujian 352100 (CN); GU, Mingguang, Ningde, Fujian 352100 (CN)
(74) Representative: Jacob, Reuben Ellis
(86) International application number: PCT/CN2022/096957
(87) International publication number: WO 2023/231014

(57) **Abstract**

Provided in the embodiments of the present application are a pressure relief apparatus, a housing, a battery cell, a battery and an electrical device, belonging to the technical field of batteries. The pressure relief apparatus is used for a battery cell, the pressure relief apparatus has a locally-formed thin weak zone, the thin weak zone is used for rupturing when the battery cell relieves pressure, and the thin weak zone has a thickness "a" and a hardness "A", and satisfies: 5 HBW/mm ≤ A/a ≤ 10000 HBW/mm. The ratio of the hardness of the thin weak zone to the thickness of the thin weak zone is set within a reasonable range so that the thin weak zone has sufficient strength in the process of normal use of the battery cell, with the pressure relief apparatus not easily rupturing at the thin weak zone. The service life of the battery cell is improved, and the risk of fire and explosion of a battery cell are reduced during the thermal runaway of the battery cell due to timely pressure relief by the pressure relief apparatus via the thin weak zone, thereby enhancing the safety of the battery cell.

## Description

### TECHNICAL FIELD

This application relates to the technical field of batteries, and in particular, to a pressure relief apparatus, a housing, a battery cell, a battery, and an electrical device.

### BACKGROUND

With the development of new energy technologies, batteries are more and more widely applied, for example, to mobile phones, laptop computers, battery vehicles, electric vehicles, electric aircrafts, electric ships, electric toy vehicles, electric toy ships, electric toy aircrafts, electric tools, and the like.

Battery cells, as energy storage elements, generally output electric energy through chemical reactions between electrode assemblies and electrolytic solutions. In the development of battery technologies, in addition to improving the performance of the battery cells, safety is also an issue to be considered. Therefore, how to improve the safety of the battery cells is an urgent problem to be solved in the battery technologies.

### SUMMARY

Embodiments of this application provide a pressure relief apparatus, a housing, a battery cell, a battery, and an electrical device, which can effectively improve the safety of the battery cell.

According to a first aspect, an embodiment of this application provides a pressure relief apparatus, used for a battery cell, wherein a weak region is locally formed on the pressure relief apparatus and configured to break when the battery cell relieves pressure, and the weak region has a thickness of a and a hardness of A, satisfying: 5 HBW/mm ≤ A/a ≤ 10000 HBW/mm.

In the foregoing technical solution, both the influence of the thickness of the weak region on the performance of the pressure relief apparatus and the influence of the hardness of the weak region on the performance of the pressure relief apparatus are considered. A ratio of the hardness of the weak region to the thickness of the weak region is set within a reasonable range, so that the weak region has sufficient strength in the normal use process of the battery cell, the pressure relief apparatus is not likely to break at the weak region, and the service life of the battery cell is prolonged; and the pressure relief apparatus can timely relieve pressure through the weak region at the time of thermal runaway of the battery cell, thereby reducing risks of fire and explosion of the battery cell and improving the safety of the battery cell.

In some embodiments, 190 HBW/mm ≤ A/a ≤ 4000 HBW/mm. In this way, the pressure relief apparatus has better performance, it is ensured that the weak region timely breaks to relieve pressure at the time of thermal runaway of the battery cell while it is ensured that the weak region has sufficient strength in the normal use process of the battery cell. On the premise of ensuring the safety of the battery cell, the service life of the battery cell is prolonged.

In some embodiments, 8 HBW ≤ A ≤ 200 HBW.

In some embodiments, 0.02 mm ≤ a ≤ 1.6 mm.

In some embodiments, the pressure relief apparatus includes a non-weak region, and the non-weak region is connected to a periphery of the weak region and has a thickness of b, satisfying: a < b. The thickness of the weak region is set to be less than the thickness of the non-weak region, so that the weak region is more likely to break than the non-weak region, so as to ensure that the pressure relief apparatus breaks to relieve pressure at the weak region at the time of thermal runaway of the battery cell.

In some embodiments, 0.05 ≤ a/b ≤ 0.95. A ratio of the thickness of the weak region to the thickness of the non-weak region is set between 0.05 and 0.95, which can not only reduce the probability of breaking of the weak region in the normal use process of the battery cell, but also reduce the probability of accidents such as fire and explosion at the time of thermal runaway of the battery cell.

In some embodiments, 0.12 ≤ a/b ≤ 0.8.

In some embodiments, the non-weak region has a hardness of B, satisfying: B < A. The hardness of the weak region is greater than the hardness of the non-weak region, which is equivalent to improving the hardness of the weak region, improving the strength of the weak region, and reducing the risk of breaking of the weak region in the normal use process of the battery cell.

In some embodiments, A/B ≤ 3. The greater a ratio of the hardness of the weak region to the hardness of the non-weak region is, the less likely the weak region is to break. If the ratio of the hardness of the weak region to the hardness of the non-weak region is too large, the weak region may not timely break to relieve pressure at the time of thermal runaway of the battery cell. Therefore, the ratio of the hardness of the weak region to the hardness of the non-weak region is set to be not greater than 3, so as to ensure that the weak region can timely break to relieve pressure at the time of thermal runaway of the battery cell, thereby improving the safety of the battery cell.

In some embodiments, the non-weak region is directly connected to the weak region. The structure is simple, and formation is easy.

In some embodiments, the pressure relief apparatus is provided with a groove, a connection region is formed on a position of the pressure relief apparatus provided with the groove, the non-weak region is connected to a periphery of the connection region, and the weak region is locally formed on the connection region. In this way, the connection region is thinner than the weak region, so that it is more likely to form the weak region on the connection region.

In some embodiments, the weak region and the non-weak region are integrally formed. The forming difficulty of the pressure relief apparatus is reduced, economy is great, and the weak region and the non-weak region have great integrity, which can improve the strength of the weak region.

In some embodiments, the pressure relief apparatus includes a pressure relief portion, the weak region extends along an edge of the pressure relief portion, and the pressure relief portion is configured to open with the weak region as a boundary. In this way, the pressure relief area of the pressure relief apparatus is increased, thereby improving the pressure relief efficiency. In some embodiments, the pressure relief apparatus is provided with a pressure relief groove, and the weak region is formed on a position of the pressure relief apparatus provided with the pressure relief groove. The weak region is formed by providing the pressure relief apparatus with the pressure relief groove, so that the weak region has a simple forming method.

In some embodiments, an anti-oxidation layer is formed on a surface layer of the pressure relief apparatus, and the anti-oxidation layer is arranged along groove wall faces of the pressure relief groove at a region provided with the pressure relief groove. The anti-oxidation layer protects the pressure relief apparatus to reduce the risk of oxidation of the pressure relief apparatus. The anti-oxidation layer is arranged along the groove wall faces of the pressure relief groove at the region provided with the pressure relief groove, and the anti-oxidation layer can well protect the region of the pressure relief apparatus provided with the pressure relief groove, so the risk that the region of the pressure relief apparatus provided with the pressure relief groove is oxidized, resulting in reduced strength of the weak region is reduced.

In some embodiments, the pressure relief apparatus includes the non-weak region, the non-weak region is connected to the periphery of the weak region, and the anti-oxidation layer has a thickness of d at the weak region and has a thickness of e at the non-weak region, satisfying: d < e. The influence of the anti-oxidation layer on the weak region is reduced, so as to ensure that the weak region can timely break to relieve pressure at the time of thermal runaway of the battery cell.

In some embodiments, the pressure relief apparatus includes a plurality of walls, the plurality of walls jointly enclose and define an accommodating space, the accommodating space is configured to accommodate an electrode assembly of the battery cell, and the weak region is formed on at least one of the walls. The pressure relief apparatus can provide the accommodating space for the electrode assembly, so that the pressure relief apparatus not only has an accommodating function of accommodating the battery cell, but also has a function of relieving pressure.

In some embodiments, the plurality of walls include a bottom wall and a plurality of side walls, the plurality of side walls enclose a periphery of the bottom wall, the plurality of side walls and the bottom wall jointly enclose and define the accommodating space, and an opening is formed in an end of the pressure relief apparatus opposite to the bottom wall; the weak region is formed on the bottom wall; and/or the weak region is formed on at least one of the side walls.

In some embodiments, the pressure relief apparatus is of a plate-like structure. The pressure relief apparatus is simple in structure and easy to form and manufacture.

According to a second aspect, an embodiment of this application provides a housing. The housing includes the pressure relief apparatus provided according to any one of the embodiments in the first aspect.

According to a third aspect, an embodiment of this application provides a battery cell. The battery cell includes an electrode assembly and the housing provided according to any one of the embodiments in the second aspect. The electrode assembly is accommodated in the housing.

According to a fourth aspect, an embodiment of this application provides a battery. The battery includes a box body and the battery cell provided according to any one of the embodiments in the third aspect. The battery cell is accommodated in the box body.

According to a fifth aspect, an embodiment of this application provides an electrical device. The electrical device includes the battery provided according to any one of the embodiments in the fourth aspect.

### BRIEF DESCRIPTION OF DRAWINGS

To describe the technical solutions in embodiments of this application more clearly, the following outlines the drawings to be used in embodiments. It should be understood that the drawings below are merely some embodiments of this application and should therefore not be regarded as limiting the scope. A person of ordinary skill in the art may derive other related drawings from such drawings without making any creative efforts.
FIG. 1 is a schematic structural diagram of a vehicle provided according to some embodiments of this application.
FIG. 2 is an exploded view of a battery provided according to some embodiments of this application.
FIG. 3 is an exploded view of a battery cell provided according to some embodiments of this application.
FIG. 4 is a top view of a pressure relief apparatus provided according to some embodiments of this application.
FIG. 5 is an A-A sectional view of the pressure relief apparatus shown in FIG. 4.
FIG. 6 is a top view of a pressure relief apparatus provided according to another some embodiments of this application.
FIG. 7 is a B-B sectional view of the pressure relief apparatus shown in FIG. 6.
FIG. 8 is a top view of a pressure relief apparatus provided according to yet another some embodiments of this application.
FIG. 9 is a C-C sectional view of the pressure relief apparatus shown in FIG. 8.
FIG. 10 is a top view of a pressure relief apparatus provided according to still another some embodiments of this application.
FIG. 11 is a top view of a pressure relief apparatus provided according to other embodiments of this application.
FIG. 12 is a partial enlarged view of a position D of the pressure relief apparatus shown in FIG. 5.
FIG. 13 is a partial enlarged view of a position E of the pressure relief apparatus shown in FIG. 7.
FIG. 14 is a partial enlarged view of a position F of the pressure relief apparatus shown in FIG. 9.
FIG. 15 is an axonometric drawing of a pressure relief apparatus provided according to some embodiments of this application.
FIG. 16 is a sectional view of the pressure relief apparatus shown in FIG. 15.
FIG. 17 is an axonometric drawing of a pressure relief apparatus provided according to yet another some embodiments of this application.
FIG. 18 is a schematic structural diagram of a housing provided according to some embodiments of this application.
FIG. 19 is a schematic structural diagram of a housing provided according to another some embodiments of this application.

Reference numerals: 1-housing; 11-shell; 12-end cover; 121-positive electrode terminal; 122-negative electrode terminal; 13-pressure relief apparatus; 131-weak region; 1311-first weak section; 1312-second weak section; 1313-third weak section; 132-non-weak region; 133-groove; 134-connection region; 135-pressure relief portion; 136-pressure relief groove; 137-first surface; 138-second surface; 139-anti-oxidation layer; 140-accommodating space; 141-bottom wall; 142-side wall; 2-electrode assembly; 21-positive tab; 22-negative tab; 10-battery cell; 20-box body; 201-first portion; 202-second portion; 100-battery; 200-controller; 300-motor; 1000-vehicle; and Z-thickness direction.

### DETAILED DESCRIPTION OF EMBODIMENTS

In order to make objectives, technical solutions and advantages of embodiments of this application clearer, the technical solutions in the embodiments of this application will be clearly described below in conjunction with drawings in the embodiments of this application. Apparently, the described embodiments are some rather than all of the embodiments of this application. Based on the embodiments in this application, all other embodiments derived by a person of ordinary skill in the art without creative work shall fall within the scope of protection of this application.

Unless otherwise defined, all technical and scientific terms used in this application have the same meanings as commonly understood by a person skilled in the technical field to which this application pertains. The terms used in the description of this application are merely intended to describe specific embodiments but not to limit this application. The terms "comprise", "have", and any other variations thereof in the description and claims of this application as well as the preceding brief description of the drawings are intended to cover non-exclusive inclusions. The terms "first", "second", and the like in the description and claims of this application or the preceding drawings are used to distinguish between different objects, not to describe a particular sequence or a primary-secondary relationship.

In this application, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments.

In the description of this application, it is thereby noted that, unless otherwise expressly specified and limited, terms "mount", "connected", "connect", "attach" and the like are to be understood in a broad sense, for example, it may be a fixed connection, or a detachable connection, or an integral connection; and it may be a direct connection or indirect connection through an intermediate medium, and may be the interior communication between two elements. For a person of ordinary skill in the art, the specific meaning of the forgoing terms in this application may be understood according to specific circumstances.

In this application, the term "and/or" is merely a description of an association relationship of associated objects and indicates that there may be three relationships. For example, A and/or B may indicate the following three cases: only A alone, both A and B, and only B alone. In addition, the character "/" in this application generally indicates an "or" relationship between contextually associated objects.

In the embodiments of this application, the same reference numerals indicate the same components, and for simplicity, in the different embodiments, a detailed description of the same components is omitted. It should be understood that the thickness, length, width, and other dimensions of the various components in the embodiments of this application, as well as the overall thickness, length, width, and other dimensions of an integrated apparatus, shown in the drawings, are merely exemplary illustrations and shall not constitute any limitation on this application.

In this application, the term "a plurality of" refers to two or more (including two).

In this application, battery cells may include lithium-ion secondary batteries, lithium-ion primary batteries, lithium-sulfur batteries, sodium-lithium-ion batteries, sodium-ion batteries or magnesium-ion batteries, etc., which are not limited by the embodiments of this application. The battery cells may be cylindrical, flat, cuboid, or have other shapes, which is also not limited by the embodiments of this application. The battery cells are generally divided into three types according to packaging methods: cylindrical battery cells, square battery cells and pouch battery cells, which is also not limited by the embodiments of this application.

A battery referred to in the embodiments of this application means a single physical module that includes one or more battery cells to provide a higher voltage and capacity. For example, the battery referred to in this application may include a battery module, a battery pack, or the like. The battery generally includes a box body configured to package one or more battery cells. The box body may avoid liquid or other foreign objects from affecting charging or discharging of the battery cells.

The battery cell includes an electrode assembly and an electrolytic solution, and the electrode assembly is composed of a positive electrode plate, a negative electrode plate and a separator. The battery cell works primarily through movement of metal ions between the positive electrode plate and the negative electrode plate. The positive electrode plate includes a positive electrode current collector and a positive electrode active material layer. A surface of the positive electrode current collector is coated with the positive electrode active material layer. A positive electrode current collector not coated with the positive electrode active material layer protrudes out of a positive electrode current collector coated with the positive electrode active material layer. The positive electrode current collector not coated with the positive electrode active material layer serves as a positive tab. Taking a lithium-ion battery as an example, a material of the positive electrode current collector may be aluminum, and a positive electrode active material may be lithium cobaltate, lithium iron phosphate, ternary lithium, lithium manganate, or the like. The negative electrode plate includes a negative electrode current collector and a negative electrode active material layer. A surface of the negative electrode current collector is coated with the negative electrode active material layer. A negative electrode current collector not coated with the negative electrode active material layer protrudes out of a negative electrode current collector coated with the negative electrode active material layer. The negative electrode current collector not coated with the negative electrode active material layer serves as a negative tab. A material of the negative electrode current collector may be copper, and a negative electrode active material may be carbon, silicon, or the like. In order to ensure that a high current is passed without fusing, there may be a plurality of positive tabs which are stacked together, and there may be a plurality of negative tabs which are stacked together. The separator may be made of polypropylene (PP), polyethylene (PE), or the like. In addition, the electrode assembly may be of a wound structure and may also be of a stacked structure. The embodiments of this application are not limited thereto.

The development of battery technologies needs to simultaneously consider various design factors, such as energy density, cycle life, discharge capacity, charge and discharge rates, and other performance parameters, and in addition, it is also necessary to consider the safety of the battery.

In the battery cell, in order to ensure the safety of the battery cell, a pressure relief apparatus may be disposed in the battery cell, a weak region is formed in the pressure relief apparatus, and pressure inside the battery cell is relieved through the weak region at the time of thermal runaway of the battery cell, so as to improve the safety of the battery cell.

The inventor has noted that in order to ensure that the pressure relief apparatus can timely relieve pressure at the time of thermal runaway of the battery cell, a thickness of the weak region may be set smaller, however, in the normal use process of the battery cell, the weak region is likely to break in a vibration environment or due to long-term change of the pressure inside the battery cell, and the service life of the battery cell is short. In order to ensure that the battery cell has a long service life, the thickness of the weak region may be set larger, however, the weak region is likely to relieve pressure untimely at the time of thermal runaway of the battery cell, accidents such as fire and explosion of the battery cell are likely to occur, and the safety of the battery cell is poor.

In view of this, an embodiment of this application provides a pressure relief apparatus. A ratio of a hardness of a weak region to a thickness of the weak region is set to 5 HBW/mm-10000 HBW/mm.

In such a pressure relief apparatus, both the influence of the thickness of the weak region on the performance of the pressure relief apparatus and the influence of the hardness of the weak region on the performance of the pressure relief apparatus are considered. The ratio of the hardness of the weak region to the thickness of the weak region is set within a reasonable range, so that the weak region has sufficient strength in the normal use process of the battery cell, the pressure relief apparatus is not likely to break at the weak region, and the service life of the battery cell is prolonged; and the pressure relief apparatus can timely relieve pressure through the weak region at the time of thermal runaway of the battery cell, thereby reducing risks of fire and explosion of the battery cell and improving the safety of the battery cell.

The pressure relief apparatus described in the embodiment of this application is applicable to a battery cell, a battery, and an electrical device using the battery.

The electrical device may be a vehicle, a mobile phone, a portable device, a notebook computer, a ship, a spacecraft, an electric toy, an electric tool, and the like. The vehicle may be a fuel vehicle, gas vehicle, or a new energy vehicle, and the new energy vehicle may be a battery electric vehicle, a hybrid electric vehicle, an extended-range vehicle, or the like; the spacecraft includes an aircraft, a rocket, a space shuttle, a spaceship, and the like; the electric toy includes a stationary or mobile electric toy, such as a game machine, an electric vehicle toy, an electric ship toy, an electric aircraft toy, and the like; the electric tool includes a metal cutting electric tool, a grinding electric tool, an assembly electric tool, and a railway electric tool, such as an electric drill, an electric grinder, an electric wrench, an electric screw driver, an electric hammer, an electric impact drill, a concrete vibrator, and an electric planer. The foregoing electrical device is not particularly limited in the embodiments of this application.

For the convenience of illustration, the following embodiments are illustrated taking the electrical device being a vehicle as an example.

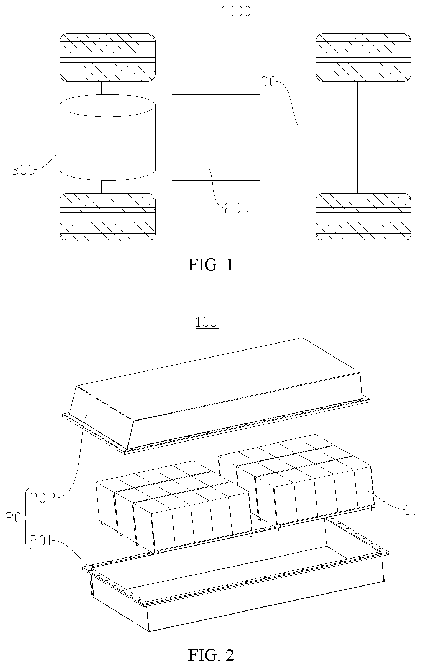

Referring to FIG. 1, FIG. 1 is a schematic structural diagram of a vehicle 1000 provided according to some embodiments of this application. The vehicle 1000 is provided with a battery 100 inside, and the battery 100 may be disposed at a bottom or head or tail of the vehicle 1000. The battery 100 may be configured to supply power to the vehicle 1000. For example, the battery 100 may be used as an operational power supply for the vehicle 1000.

The vehicle 1000 may also include a controller 200 and a motor 300, and the controller 200 is configured to control the battery 100 to power the motor 300, such as for the working power needs of the vehicle 1000 during start-up, navigation, and travelling.

In some embodiments of this application, the battery 100 may serve not only as the operational power supply of the vehicle 1000, but also as a driving power supply of the vehicle 1000, replacing or partially replacing fuel or natural gas to provide driving power for the vehicle 1000.

Reference is made to FIG. 2, which is an exploded view of a battery 100 provided according to some embodiments of this application. The battery 100 includes a battery cell 10 and a box body 20, and the battery cell 10 is accommodated in the box body 20.

The box body 20 is a component for accommodating the battery cell 10, provides an accommodating space or the battery cell 10, and may be of various structures. In some embodiments, the box body 20 may include a first portion 201 and a second portion 202. The first portion 201 and the second portion 202 cover each other to define the accommodating space for accommodating the battery cell 10. The first portion 201 and the second portion 202 may have various shapes, such as a cuboid and a cylinder. The first portion 201 may be of a hollow structure with one side opened, the second portion 202 may also be of a hollow structure with one side opened, and the opened side of the second portion 202 covers the opened side of the first portion 201 to form the box body 20 with the accommodating space. Alternatively, the first portion 201 is of a hollow structure with one side opened, the second portion 202 is of a plate-like structure, and the second portion 202 covers the opened side of the first portion 201 to form the box body 20 with the accommodating space. The first portion 201 and the second portion 202 may be sealed through a sealing element, and the sealing element may be a sealing ring, a sealant, or the like.

In the battery 100, there may one or more battery cells 10. If there are a plurality of battery cells 10, the plurality of battery cells 10 may be connected in series, parallel or series-parallel, where being connected in series-parallel means a combination of series connection and parallel connection of the plurality of battery cells 10. The plurality of battery cells 10 may be first connected in series, parallel or series-parallel to form battery modules, and then the plurality of battery modules are connected in series, parallel or series-parallel to form a whole and accommodated in the box body 20. Alternatively, the battery cells 10 may also be first directly connected together in series, parallel or series-parallel, and then a whole formed by all the battery cells 10 is accommodated in the box body 20.

In some embodiments, the battery 100 may further include a bus component, and the plurality of battery cells 10 may be electrically connected through the bus component so as to be connected in series, parallel or series-parallel. The bus component may be a metal conductor, such as copper, iron, aluminum, stainless steel, and aluminum alloy.

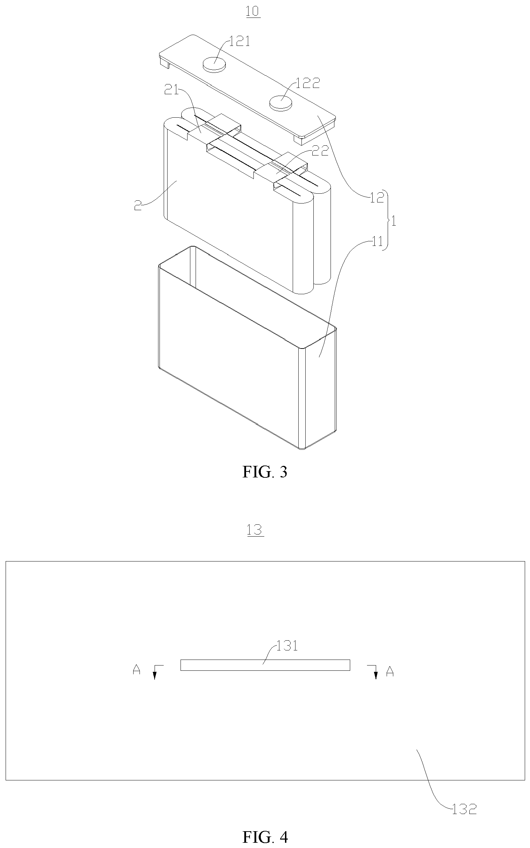

Reference is made to FIG. 3, which is an exploded view of a battery cell 10 provided according to some embodiments of this application. The battery cell 10 may include a housing 1 and an electrode assembly 2.

The housing 1 is a component configured to accommodate the electrode assembly 2. The housing 1 may have various shapes, such as a cylinder and a cuboid. The housing 1 may include a shell 11 and an end cover 12.

The shell 11 may be of a hollow structure with an opening formed in one end, and the shell 11 may also be of a hollow structure with openings formed in two opposite ends. The shell 11 may be made of various materials, such as copper, iron, aluminum, steel, and aluminum alloy.

The end cover 12 is a component for closing the opening of the shell 11 to isolate an internal environment of the battery cell 10 from an external environment. The end cover 12 and the shell 11 jointly define a sealing space for accommodating the electrode assembly 2, an electrolytic solution and other components. The end cover 12 may be connected to the shell 11 in a welded or wind-sealed manner to close the opening of the shell 11. The shape of the end cover 12 may be matched with that of the housing 1. For example, the shell 11 is of a cuboid structure, and the end cover 12 is of a rectangular plate-like structure matched with the housing 1. For another example, the shell 11 is a cylinder, and the end cover 12 is of a circular plate-like structure matched with the shell 11. The end cover 12 may also be made of various materials, such as copper, iron, aluminum, steel, and aluminum alloy.

In the battery cell 10, there may be one or two end covers 12. In an embodiment where the shell 11 is of a hollow structure with openings formed in two ends, two end covers 12 may be correspondingly disposed, the two end covers 12 close the two openings of the shell 11 respectively, and the two end coves 12 and the shell 11 jointly define a sealing space. In an embodiment where the shell 11 is of a hollow structure with an opening formed in one end, one end cover 12 may be correspondingly disposed, the end cover 12 closes the opening in one end of the shell 11, and the end cover 12 and the shell 11 jointly define a sealing space.

The electrode assembly 2 is a component in which an electrochemical reaction takes place in the electrode assembly 10. The electrode assembly 2 may include a positive electrode plate, a negative electrode plate and a separator. The electrode assembly 2 may be of a wound structure formed by winding the positive electrode plate, the separator and the negative electrode plate, and may also be of a stacked structure formed by stacking the positive electrode plate, the separator and the negative electrode plate. The electrode assembly 2 is provided with a positive tab 21 and a negative tab 22. The positive tab 21 may be a portion of the positive electrode plate not coated with a positive electrode active material layer, and the negative tab 22 may be a portion of the negative electrode plate not coated with a negative electrode active material layer.

The battery cell 10 may further include an electrode terminal, and the electrode terminal is disposed on the end cover 12 and configured to be electrically connected to the tabs of the electrode assembly 2 to output electric energy of the battery cell 10. The electrode terminal may be directly connected to the tabs. For example, the electrode terminal is directly welded to the tabs. The electrode terminal may also be indirectly connected to the tabs. For example, the electrode terminal is indirectly connected to the tabs through a current collection component. The current collection component may be a metal conductor, such as copper, iron, aluminum, steel, and aluminum alloy.

As shown in FIG. 3, taking the shell 11 being of a hollow structure with an opening formed in one end as an example, two electrode terminals may be disposed on the end cover 12, and the two electrode terminals are a positive electrode terminal 121 and a positive electrode terminal 122 respectively, where the positive electrode terminal 121 is electrically connected to the positive tab 21, and the negative electrode terminal 122 is electrically connected to the negative tab 22.

A pressure relief apparatus 13 (not shown in FIG. 3) may be disposed in the battery cell 10, and the pressure relief apparatus 13 is a component for relieving pressure inside the battery cell 10. When internal pressure or temperature of the battery cell 10 reaches a threshold value, the pressure inside the battery cell 10 is relieved through the pressure relief apparatus 13. The specific structure of the pressure relief apparatus 13 is described in detail below in conjunction with the drawings.

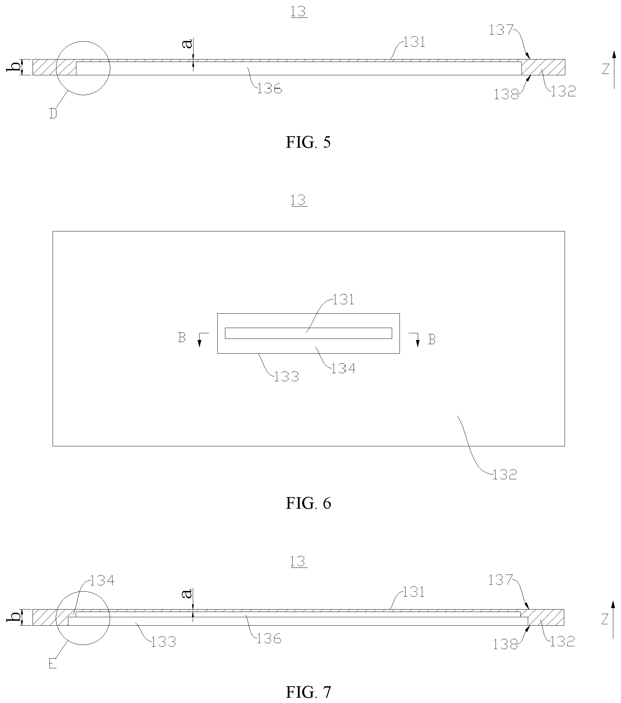

Reference is made to FIG. 4 and FIG. 5. FIG. 4 is a top view of a pressure relief apparatus 13 provided according to some embodiments of this application. FIG. 5 is an A-A sectional view of the pressure relief apparatus 13 shown in FIG. 4. An embodiment of this application provides a pressure relief apparatus 13, used for a battery cell 10, wherein a weak region 131 is locally formed on the pressure relief apparatus 13 and configured to break when the battery cell 10 relieves pressure, and the weak region 131 has a thickness of a and a hardness of A, satisfying: 5 HBW/mm ≤ A/a ≤ 10000 HBW/mm.

The pressure relief apparatus 13 may be the end cover 12 itself, and may also be the shell 11 itself. The pressure relief apparatus 13 may also be an independent component disposed on the shell 11 and/or the end cover 12. For example, the pressure relief apparatus 13 may be a rupture disc disposed on the end cover 12 and/or the shell 11. The pressure relief apparatus 13 may be made of a metal material, such as copper, iron, aluminum, steel, and aluminum alloy; and the pressure relief apparatus 13 may also be a non-metal material, such as plastic.

The weak region 131 is a portion of the pressure relief apparatus 13 that is weaker than other regions thereof. In the pressure relief apparatus 13, the weak region 131 is more likely to break than the other regions. When the pressure inside the battery cell 10 reaches relief pressure and needs to be relieved, the weak region 131 can break, so that an emission inside the battery cell 10 is discharged to achieve the purpose of relieving the pressure inside the battery cell 10. The weak region 131 may have a uniform or nonuniform thickness. If the weak region 131 has a uniform thickness, a thickness measured at any position of the weak region 131 is the thickness of the weak region 131; and if the weak region 131 has a nonuniform thickness, a thickness measured at a thinnest position of the weak region 131 is the thickness of the weak region 131, that is, a is the minimum thickness of the weak region 131.

The weak region 131 may have various shapes, such as a rectangle, a circle, an oval, a ring shape, a U shape, a C shape, and an H shape. If the weak region 131 has a ring shape, the weak region 131 is a closed structure that extends along a closed trajectory with head and tail ends connected, and the ring shape may be a rectangular ring, a circular ring, etc.

A hardness of the weak region 131 is Brinell hardness in a unit of HBW. For a measurement method of the Brinell hardness, reference may be made to a measurement principle in GBIT 23.1-2018 for implementation. In the actual measurement process, the hardness of the weak region 131 may be measured on any surface in a thickness direction Z of the weak region 131. Taking the end cover 12 of the battery cell 10 serving as the pressure relief apparatus 13 as an example, the hardness of the weak region 131 may be measured on an outer surface of the weak region 131, and the hardness of the weak region 131 may also be measured on an inner surface of the weak region 131. In the battery cell 10, in the thickness direction Z of the weak region 131, the inner surface of the weak region 131 is a surface of the weak region 131 facing towards an inside of the battery cell 10, and the outer surface of the weak region 131 is a surface of the weak region 131 facing towards an outside of the battery cell 10.

A/a may be any value between 5 HBW/mm and 10000 HBW/mm, e.g., 5 HBW/mm, 50 HBW/mm, 100 HBW/mm, 190 HBW/mm, 500 HBW/mm, 1000 HBW/mm, 4000 HBW/mm, 8000 HBW/mm, and 10000 HBW/mm.

In order to test the influence of a ratio of the hardness of the weak region 131 to the thickness of the weak region 131 on the performance of the pressure relief apparatus 13, a plurality of sets of battery cells 10 are tested. The test results are shown in Table 1:

**Table 1**

| Serial number of battery cell | A (HBW) | a (mm) | A/a (HBW/mm) | Weak region breaking in normal use period of battery cell or not | Weak region timely breaking at time of thermal runaway of battery cell or not |
|---|---|---|---|---|---|
| 1 | 8 | 2 | 4 | Not | Not |
| 2 | 8 | 1.6 | 5 | Not | Yes |
| 3 | 10 | 0.2 | 50 | Not | Yes |
| 4 | 15 | 0.15 | 100 | Not | Yes |
| 5 | 19 | 0.1 | 190 | Not | Yes |
| 6 | 50 | 0.1 | 500 | Not | Yes |
| 7 | 100 | 0.1 | 1000 | Not | Yes |
| 8 | 200 | 0.05 | 4000 | Not | Yes |
| 9 | 200 | 0.025 | 8000 | Not | Yes |
| 10 | 200 | 0.02 | 10000 | Not | Yes |
| 11 | 200 | 0.016 | 12500 | Yes | Yes |

When A/a > 10000 HBW/mm, the weak region 131 has a small thickness and a large hardness, which will causes the weak region131 to be very thin and brittle and likely to break, and the weak region 131 breaks in the normal use period of the battery cell 10, and the service life of the battery cell 10 is short. When A/a < 5 HBW/mm, the weak region 131 has a large thickness and a small hardness, and at the time of thermal runaway of the battery cell 10, the weak region 131 will first deform and then is elongated, and does not timely break to relieve pressure.

However, when 5 HBW/mm ≤ A/a≤ 10000 HBW/mm, the weak region 131 does not break in the normal use period of the battery cell 10, and at the time of thermal runaway of the battery cell 10, the weak region 131 can timely break to relieve pressure.

As can be seen, the ratio of the hardness of the weak region 131 to the thickness of the weak region 131 is set within a reasonable range, so that the weak region 131 has sufficient strength in the normal use process of the battery cell 10, the pressure relief apparatus 13 is not likely to break at the weak region 131, and the service life of the battery cell 10 is prolonged; and the pressure relief apparatus 13 can timely relieve pressure through the weak region 131 at the time of thermal runaway of the battery cell 10, thereby reducing risks of fire and explosion of the battery cell 10 and improving the safety of the battery cell 10.

In some embodiments, 190 HBW/mm ≤ A/a ≤ 4000 HBW/mm.

Exemplarily, A/a may be 190 HBW/mm, 500 HBW/mm, 1000 HBW/mm, 4000 HBW/mm, etc.

In the embodiment, A/a is set between 190 HBW/mm and 4000 HBW/mm, so that the pressure relief apparatus 13 has better performance, it is ensured that the weak region 131 timely breaks to relieve pressure at the time of thermal runaway of the battery cell 10, and at the same time, it is ensured that the weak region 131 has sufficient strength in the normal use process of the battery cell 10. On the premise of ensuring the safety of the battery cell 10, the service life of the battery cell 10 is prolonged.

In some embodiments, 8 HBW ≤ A ≤ 200 HBW.

A may be any value between 8 HBW and 200 HBW, e.g., 8 HBW, 10 HBW, 15 HBW, 19 HBW, 50 HBW, 100 HBW, and 200 HBW.

In some embodiments, 0.02 mm ≤ a ≤ 1.6 mm.

a may be any value between 0.02 mm and 1.6 mm, e.g., 0.02 mm, 0.025 mm, 0.05 mm, 0.1 mm, 0.15 mm, 0.2 mm, and 1.6 mm.

In some embodiments, still referring to FIG. 4, the pressure relief apparatus 13 includes a non-weak region 132, and the non-weak region 132 is connected to a periphery of the weak region 131 and has a thickness of b, satisfying: a < b.

The non-weak region 132 is more difficult to break than the weak region 131. When the pressure inside the battery cell 10 reaches relief pressure at the time of thermal runaway, the weak region 131 breaks to relieve pressure, but the non-weak region 132 does not break. The non-weak region 132 may have a uniform or nonuniform thickness. If the non-weak region 132 has a uniform thickness, a thickness measured at any position of the non-weak region 132 is the thickness of the non-weak region 132; and if the non-weak region 132 has a nonuniform thickness, a thickness measured at a thinnest position of the non-weak region 132 is the thickness of the non-weak region 132, that is, b is the minimum thickness of the non-weak region 132.

The non-weak region 132 and the weak region 131 may be directly connected, and may also be indirectly connected.

In the embodiment, the thickness of the weak region 131 is set to be less than the thickness of the non-weak region 132, so that the weak region 131 is more likely to break than the non-weak region 132, so as to ensure that the pressure relief apparatus 13 breaks to relieve pressure at the weak region 131 at the time of thermal runaway of the battery cell 10.

In other embodiments, the weak region 131 may be more likely to break than the non-weak region 132 in other ways. For example, the weak region 131 and the non-weak region 132 are equal in thickness, but the weak region 131 and the non-weak region 132 are made of different materials, and the material of the weak region 131 is more likely to break than the material of the non-weak region 132, so that the weak region 131 breaks at the time of thermal runaway of the battery cell 10, and the non-weak region 132 does not break.

In some embodiments, 0.05 ≤ a/b ≤ 0.95.

a/b may be any value between 0.05 and 0.95, e.g., 0.05, 0.12, 0.2, 0.8, and 0.95.

If the ratio of the thickness of the weak region 131 to the thickness of the non-weak region 132 is too small, the strength of the weak region 131 may be insufficient. If the ratio of the thickness of the weak region 131 to the thickness of the non-weak region 132 is too large, it may be difficult for the weak region 131 to crack at the time of thermal runaway of the battery cell 10, and the pressure is untimely relieved, resulting in accidents such as fire and explosion of the battery cell 10.

Therefore, the ratio of the thickness of the weak region 131 to the thickness of the non-weak region 132 is set between 0.05 and 0.95, which can not only reduce the probability of breaking of the weak region 131 in the normal use process of the battery cell 10, but also reduce the probability of accidents such as fire and explosion at the time of thermal runaway of the battery cell 10.

In some embodiments, 0.12 ≤ a/b ≤ 0.8.

In the embodiment, a/b is set between 0.12 and 0.8, so that the pressure relief apparatus 13 has better performance, it is ensured that the weak region 131 timely breaks to relieve pressure at the time of thermal runaway of the battery cell 10, and at the same time, it is ensured that the weak region 131 has sufficient strength in the normal use process of the battery cell 10.

In some embodiments, the non-weak region 132 has a hardness of B, satisfying: B < A.

The hardness of the non-weak region 132 is also Brinell hardness. The hardness of the non-weak region 132 may be measured on any surface in a thickness direction Z of the non-weak region 132. Taking the end cover 12 of the battery cell 10 serving as the pressure relief apparatus 13 as an example, the hardness of the non-weak region 132 may be measured on an outer surface of the non-weak region 132, and the hardness of the non-weak region 132 may also be measured on an inner surface of the non-weak region 132. In the thickness direction Z of the non-weak region 132, the inner surface of the non-weak region 132 is a surface of the non-weak region 132 facing towards an inside of the battery cell 10, and the outer surface of the non-weak region 132 is a surface of the non-weak region 132 facing towards an outside of the battery cell 10.

In the embodiment, the hardness of the weak region 131 is greater than the hardness of the non-weak region 132, which is equivalent to improving the hardness of the weak region 131, improving the strength of the weak region 131, and reducing the risk of breaking of the weak region 131 in the normal use process of the battery cell 10.

In some embodiments, A/B ≤ 3.

Since B < A, it may be understood that 1 < A/B ≤ 3. Exemplarily, A/B may be 1.1, 1.5, 2, 2.5, and 3.

The greater the ratio of the hardness of the weak region 131 to the hardness of the non-weak region 132 is, the less likely the weak region 131 is to break. If the ratio of the hardness of the weak region 131 to the hardness of the non-weak region 132 is too large, the weak region 131 may not timely break to relieve pressure at the time of thermal runaway of the battery cell 10.

Therefore, the ratio of the hardness of the weak region 131 to the hardness of the non-weak region 132 is set to be not greater than 3, so as to ensure that the weak region 131 can timely break to relieve pressure at the time of thermal runaway of the battery cell 10, thereby improving the safety of the battery cell 10.

In some embodiments, still referring to FIG. 4 and FIG. 5, the non-weak region 132 is directly connected to the weak region 131.

As shown in FIG. 4, taking the pressure relief apparatus 13 being a rectangular plate and the weak region 131 being rectangular as an example, the non-weak region 132 is a portion of the pressure relief apparatus 13 enclosing the periphery of the weak region 131.

In the embodiment, the non-weak region 132 is directly connected to the weak region 131, the structure is simple, and formation is easy.

In some embodiments, reference is made to FIG. 6 and FIG. 7. FIG. 6 is a top view of a pressure relief apparatus 13 provided according to another some embodiments of this application. FIG. 7 is a B-B sectional view of the pressure relief apparatus 13 shown in FIG. 6. The pressure relief apparatus 13 is provided with a groove 133, a connection region 134 is formed on a position of the pressure relief apparatus 13 provided with the groove 133, a non-weak region 132 is connected to a periphery of a connection region 134, and the weak region 131 is locally formed on the connection region 134.

The groove 133 may have various shapes, such as a rectangle, a circle, and an oval. The groove 133 may be formed in various ways, such as punch forming, and milling forming, which are not particularly limited in the embodiments of this application.

It may be understood that in the embodiment, the non-weak region 132 is indirectly connected to the weak region 131, and a portion of the connection region 134 other than the weak region 131 connects the weak region 131 to the non-weak region 132. Taking both the groove 133 and the weak region 131 being rectangular as an example, the non-weak region 132 is a portion of the pressure relief apparatus 13 enclosing the periphery of the connection region 134, and a portion of the connection region 134 enclosing the periphery of the weak region 131 connects the weak region 131 to the non-weak region 132.

In the embodiment, the connection region 134 is thinner than the non-weak region 132, and it is more likely to form the weak region 131 on the connection region 134, so that the weak region 131 is not too thick to meet a thickness requirement of the weak region 131.

In some embodiments, the weak region 131 and the non-weak region 132 are integrally formed.

It is hereby noted that the weak region 131 and the non-weak region 132 may be integrally formed whether the weak region 131 and the non-weak region 132 are directly or indirectly connected.

In the embodiment, the weak region 131 and the non-weak region 132 are of an integrally formed structure, so that the forming difficulty of the pressure relief apparatus 13 is reduced, economy is great, and the weak region 131 and the non-weak region 132 have great integrity, which can improve the strength of the weak region 131.

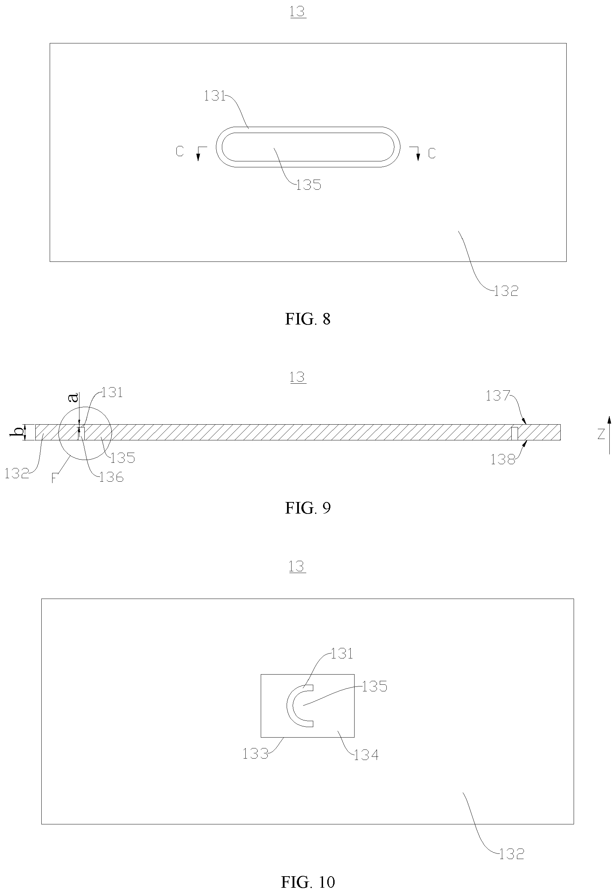

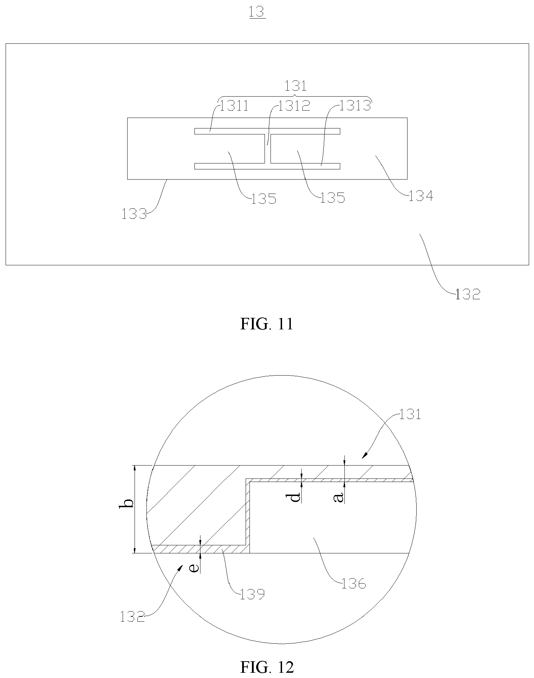

In some embodiments, reference is made to FIG. 8 to FIG. 11. FIG. 8 is a top view of a pressure relief apparatus 13 provided according to yet another some embodiments of this application. FIG. 9 is a C-C sectional view of the pressure relief apparatus 13 shown in FIG. 8. FIG. 10 is a top view of a pressure relief apparatus 13 provided according to still another some embodiments of this application. FIG. 11 is a top view of a pressure relief apparatus 13 provided according to other embodiments of this application. The pressure relief apparatus 13 includes a pressure relief portion 135, the weak region 131 extends along an edge of the pressure relief portion 135, and the pressure relief portion 135 is configured to open with the weak region 131 as a boundary.

The pressure relief portion 135 is a region of the pressure relief apparatus 13 defined by the weak region 131. There may be one pressure relief portion 135 defined by the weak region 131. For example, as shown in FIG. 8, the weak region 131 has a ring shape; and for another example, as shown in FIG. 10, the weak region 131 has a C shape. There may also be a plurality of pressure relief portions 135 defined by the weak region 131. For example, as shown in FIG. 11, the weak region 131 has an H shape, and there are two pressure relief portions 135 defined by the weak region 131.

As shown in FIG. 11, in an implementation where the weak region 131 has an H shape, the weak region 131 may include a first weak section 1311, a second weak section 1312 and a third weak section 1313. The first weak section 1311 and the third weak section 1313 are oppositely disposed. The second weak section 1312 is connected between the first weak section 1311 and the third weak section 1313. The first weak section 1311, the second weak section 1312 and the third weak section 1313 jointly form the H shape. In other embodiments, the weak region 131 may further include a fourth weak section. The fourth weak section is located between the first weak section 1311 and the third weak section 1313, and intersects with the second weak section 1312. A position of the weak region 131 first breaking is formed at an intersection of the fourth weak section and the second weak section 1312.

The weak region 131 may be of a closed structure that extends along a closed trajectory with head and tail ends connected. For example, as shown in FIG. 8, the weak region 131 has a ring shape. The weak region 131 may also be of a non-closed structure that extends along a non-closed trajectory with a distance between the head and tail ends. For example, as shown in FIG. 10, the weak region has a C shape.

At the time of thermal runaway of the battery cell 10, the weak region 131 breaks, and the pressure relief portion 135 can open with the weak region 131 as a boundary, so as to relieve pressure inside the battery cell 10. If the weak region 131 is of the closed structure, the weak region 131 may be opened in a disconnected manner; and if the weak region 131 is of the non-closed structure, the weak region 131 may be opened in a manner of being outward turned over.

Exemplarily, as shown in FIG. 8 and FIG. 9, the weak region 131 is directly connected to the non-weak region 132, the non-weak region 132 is connected to an outer edge of the weak region 131, and the pressure relief portion 135 is connected to an inner edge of the weak region 131.

Exemplarily, as shown in FIG. 10 and FIG. 11, the pressure relief apparatus 13 is provided with a groove 133, a connection region 134 is formed on a position of the pressure relief apparatus 13 provided with the groove 133, the non-weak region 132 is connected to a periphery of the connection region 134, and the weak region 131 is locally formed on the connection region 134, so that the weak region 131 is indirectly connected to the non-weak region 132.

In the embodiment, the pressure relief portion 135 increases the pressure relief area of the pressure relief apparatus 13, thereby improving the pressure relief efficiency.

In some embodiments, still referring to FIG. 4 to FIG. 11, the pressure relief apparatus 13 is provided with a pressure relief groove 136, and the weak region 131 is formed on a position of the pressure relief apparatus 13 provided with the pressure relief groove 136.

After the pressure relief groove 136 is provided in the pressure relief apparatus 13, a remaining portion of the pressure relief apparatus 13 at the pressure relief groove 136 is the weak region 131. By providing the pressure relief groove 136 on the pressure relief apparatus 13, the thickness of the non-weak region 132 of the pressure relief apparatus 13 may be greater than the thickness of the weak region 131. As shown in FIG. 4, FIG. 5, FIG. 8 and FIG. 9, in a case that the pressure relief apparatus 13 is not provided with a groove 133 inside but provided with a pressure relief groove 136, the weak region 131 and the non-weak region 132 are integrally formed. As shown in FIG. 6, FIG. 7, FIG. 10 and FIG. 11, in a case that both a groove 133 and a pressure relief groove 136 are provided in the pressure relief apparatus 13, the pressure relief groove 136 may be provided in a groove bottom face of the groove 133 (a surface of the connection region 134). During formation, the groove 133 may be machined on the pressure relief apparatus 13, and then the pressure relief groove 136 is machined on the groove bottom face of the groove 133, so that the weak region 131 and the non-weak region 132 are integrally formed.

The pressure relief groove 136 may have various shapes, such as a rectangle, a circle, an oval, a ring shape, a U shape, a C shape, and an H shape. The shape of the pressure relief groove 136 is the same as that of the weak region 131. For example, the pressure relief groove 136 is a rectangle, the weak region 131 is also a rectangle; for another example, the pressure relief groove 136 has a C shape, the weak region 131 also has a C shape; and for yet another example, the pressure relief groove 136 has an H shape, the weak region 131 also has an H shape. The pressure relief groove 136 may be formed in various ways, such as punch forming, and milling forming, which are not particularly limited in the embodiments of this application. After the pressure relief groove 136 is formed by punching, the hardness of the weak region 131 may be greater than the hardness of the non-weak region 132.

As shown in FIG. 5, FIG. 7 and FIG. 9, the pressure relief apparatus 13 is provided with a first surface 137 and a second surface 138 that are oppositely disposed in the thickness direction Z of the non-weak region 132, and a distance between the first surface 137 and the second surface 138 is the thickness of the non-weak region 132. As shown in FIG. 5 and FIG. 9, in an embodiment where the pressure relief apparatus 13 is provided with a pressure relief groove 136 but not provided with a groove 133, the pressure relief groove 136 may be provided in either the first surface 137 or the second surface 138, and pressure relief grooves 136 may also be provided in both the first surface 137 and the second surface 138. As shown in FIG. 7, in an embodiment where the pressure relief apparatus 13 is provided with both a pressure relief groove 136 and a groove 133, the groove 133 may be provided in either the first surface 137 or the second surface 138, and then the pressure relief groove 136 is provided in the groove bottom face of the groove 133; and grooves 133 may also be provided in both the first surface 137 and the second surface 138, and then the pressure relief groove 136 is provided in groove bottom faces of the grooves 133. Taking the pressure relief apparatus 13 being the end cover 12 of the battery cell 10 as an example, the first surface 137 may be a surface of the end cover 12 facing towards the inside of the battery cell 10, and the second surface 138 may be a surface of the end cover 12 facing towards the outside of the battery cell 10.

In the embodiment, the weak region 131 is formed by providing the pressure relief groove 136 in the pressure relief apparatus 13, and the forming method of the weak region 131 is simple.

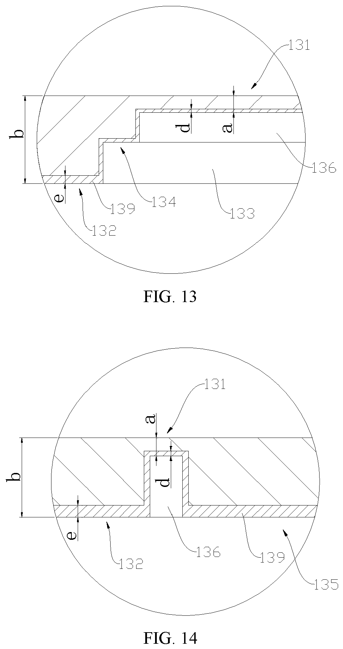

In some embodiments, reference is made to FIG. 12 to FIG. 14. FIG. 12 is a partial enlarged view of a position D of the pressure relief apparatus 13 shown in FIG. 5. FIG. 13 is a partial enlarged view of a position E of the pressure relief apparatus 13 shown in FIG. 7. FIG. 14 is a partial enlarged view of a position F of the pressure relief apparatus 13 shown in FIG. 9. An anti-oxidation layer 139 is formed on a surface layer of the pressure relief apparatus 13, and the anti-oxidation layer 139 is arranged along groove wall faces of the pressure relief groove 136 at a region provided with the pressure relief groove 136.

The pressure relief groove 136 is defined by a portion of the anti-oxidation layer 139 located at the weak region 131. The groove wall faces of the pressure relief groove 136 include groove side faces and a groove bottom face, and the groove side faces and the groove bottom face are all portions of an outer surface of the anti-oxidation layer 139. The anti-oxidation layer 139 may be a metal plating layer located on a surface layer of the pressure relief apparatus 13. For example, a main portion of the pressure relief apparatus 13 is a steel layer, and the anti-oxidation layer 139 is a nickel layer plated on a surface of the main portion. When the hardness of the weak region 131 is measured, it is determined by a hardness of a portion of the main portion located on the weak region 131. When the hardness of the non-weak region 132 is measured, it is determined by a hardness of a portion of the main portion located on the non-weak region 132.

The anti-oxidation layer 139 protects the pressure relief apparatus 13 to reduce the risk of oxidation of the pressure relief apparatus 13. The anti-oxidation layer 139 is arranged along the groove wall faces of the pressure relief groove 136 at the region provided with the pressure relief groove 136, and the anti-oxidation layer 139 can well protect the region of the pressure relief apparatus 13 provided with the pressure relief groove 136, so that the risk that the region of the pressure relief apparatus 13 provided with the pressure relief groove 136 is oxidized, resulting in reduced strength of the weak region 131 is reduced.

In some embodiments, still referring to FIG. 12 to FIG. 14, the pressure relief apparatus 13 includes the non-weak region 132, the non-weak region 132 is connected to the periphery of the weak region 131, and the anti-oxidation layer 139 has a thickness of d at the weak region 131 and has a thickness of e at the non-weak region 132, satisfying: d < e.

The non-weak region 132 and the weak region 131 may be directly connected, and may also be indirectly connected.

In the embodiment, d < e, which reduces the influence of the anti-oxidation layer 139 on the weak region 131 and ensures that the weak region 131 can timely break to relieve pressure at the time of thermal runaway of the battery cell 10.

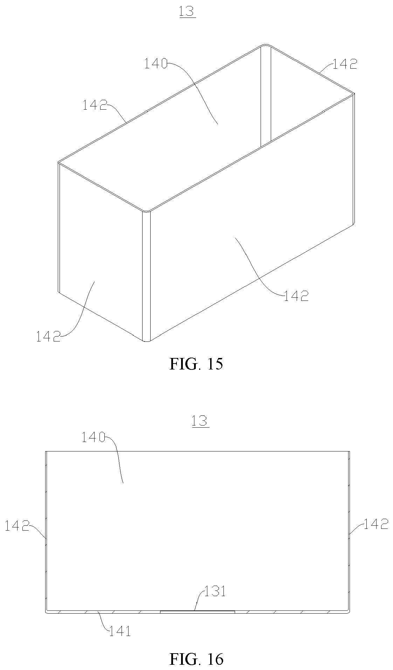

In some embodiments, reference is made to FIG. 15 and FIG. 16. FIG. 15 is an axonometric drawing of a pressure relief apparatus 13 provided according to some embodiments of this application. FIG. 16 is a sectional view of the pressure relief apparatus 13 shown in FIG. 15. The pressure relief apparatus 13 includes a plurality of walls, the plurality of walls jointly enclose and define an accommodating space 140, the accommodating space 140 is configured to accommodate an electrode assembly 2 of the battery cell 10, and the weak region 131 is formed on at least one of the walls.

The pressure relief apparatus 13 may have various shapes, such as a cylinder and a cuboid. Exemplarily, in FIG. 15 and FIG. 16, the pressure relief apparatus 13 is a cuboid. In the pressure relief apparatus 13, the weak region 131 may be formed on one of the walls, and may also be formed on the plurality of walls. For the wall with the weak region 131 formed thereon, if the weak region 131 is directly connected to the non-weak region 132, a region of the wall other than the weak region 131 is the non-weak region 132.

Taking the pressure relief apparatus 13 being a cuboid as an example, there may be six walls in the pressure relief apparatus 13, five of which form the shell 11 of the housing 1, the other wall serves as the end cover 12 of the housing 1, and the shell 11 and the end cover 12 jointly form the pressure relief apparatus 13. There may also be five walls in the pressure relief apparatus 13, the five walls form the shell 11 of the housing 1, and the shell 11 serves as the pressure relief apparatus 13.

The pressure relief apparatus 13 can provide the accommodating space 140 for the electrode assembly 2, so that the pressure relief apparatus 13 not only has an accommodating function of accommodating the battery cell 10, but also has a function of relieving pressure.

In some embodiments, still referring to FIG. 15 and FIG. 16, the plurality of walls include a bottom wall 141 and a plurality of side walls 142, the plurality of side walls 142 enclose a periphery of the bottom wall 141, the plurality of side walls 142 and the bottom wall 141 jointly enclose and define the accommodating space 140, and an opening is formed in an end of the pressure relief apparatus 13 opposite to the bottom wall 141. The weak region 131 is formed on the bottom wall 141; and/or the weak region 131 is formed on at least one of the side walls 142.

There may three, four, five or more side walls 142 in the pressure relief apparatus 13. Exemplarily, the pressure relief apparatus 13 is a cuboid, there are a total of five walls in the pressure relief apparatus 13, one of which is the bottom wall 141, and four of which are the side walls 142. In FIG. 16, the weak region 131 is formed on the bottom wall 141.

In the embodiment, the weak region 131 may be formed on the bottom wall 141, so as to relieve pressure from the bottom wall 141. The weak region 131 may also be formed on at least one of the side walls 142, so as to relieve pressure from the side wall 142. If weak regions 131 are formed on the plurality of side walls 142, the pressure relief apparatus 13 may relieve pressure from a plurality of directions. Even if a weak region 131 on one of the side walls 142 is shielded, the pressure may be relieved through the weak regions 131 on the other side walls 142. Certainly, weak regions 131 may also be formed on both the bottom wall 141 and at least one of the side walls 142, so as to improve the pressure relief efficiency of the pressure relief apparatus 13.

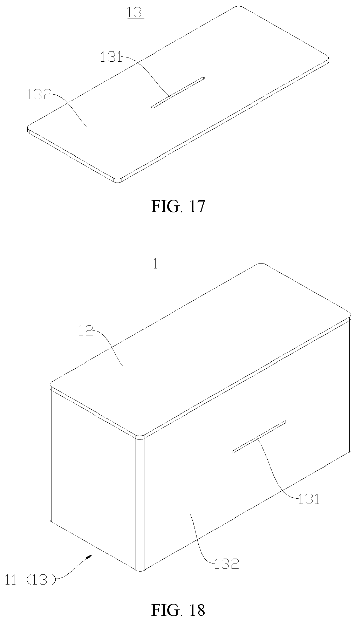

In some embodiments, reference is made to FIG. 17. FIG. 17 is an axonometric drawing of a pressure relief apparatus 13 provided according to another some embodiments of this application. The pressure relief apparatus 13 is of a plate-like structure.

The plate-like pressure relief apparatus 13 may serve as the end cover 12 of the housing 1, so as to close the opening of the shell 11. The pressure relief apparatus 13 may also be a plate-like component mounted on the end cover 12 and/or the shell 11, such as a rupture disc. The pressure relief apparatus 13 may have various shapes, such as a circle and a rectangle. Exemplarily, in FIG. 17, the pressure relief apparatus 13 is of a rectangular plate-like structure.

In the embodiment, the pressure relief apparatus 13 is of a plate-like structure. The pressure relief apparatus 13 is simple in structure and easy to form and manufacture.

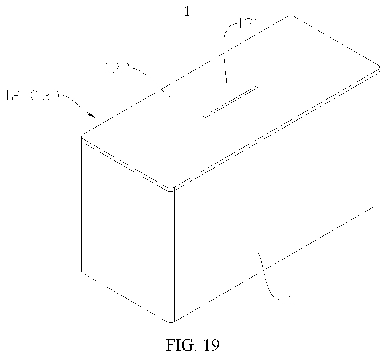

Reference is made to FIG. 18 and FIG. 19. FIG. 18 is a schematic structural diagram of a housing 1 provided according to some embodiments of this application. FIG. 19 is a schematic structural diagram of a housing 1 provided according to another some embodiments of this application. An embodiment of this application provides a housing 1. The housing 1 includes the pressure relief apparatus 13 provided according to any one of the foregoing embodiments.

In some embodiments, as shown in FIG. 18, the pressure relief apparatus 13 is the shell 11 of the housing 1. In another some embodiments, as shown in FIG. 19, the pressure relief apparatus 13 is the end cover 12 of the housing 1.

An embodiment of this application provides a battery cell 10. The battery cell 10 includes an electrode assembly 2 and the housing 1 provided according to any one of the foregoing embodiments. The electrode assembly 2 is accommodated in the housing 1.

An embodiment of this application provides a battery 100. The battery 100 includes a box body 20 and the battery cell 10 provided according to any one of the foregoing embodiments. The battery cell 10 is accommodated in the box body 20.

An embodiment of this application provides an electrical device. The electrical device includes the battery 100 provided according to any one of the foregoing embodiments.

In addition, as shown in FIG. 19, an embodiment of this application further provides a prismatic housing 1. The prismatic housing 1 includes a shell 11 and an end cover 12. The end cover 12 closes an opening of the shell 11, and the end cover 12 includes a weak region 131 and a non-weak region 132 directly connected to the weak region 131. The non-weak region 132 is connected to a periphery of the weak region 131. The weak region 131 has a thickness of a and a hardness of A, and the non-weak region 132 has a thickness of b and a hardness of B, satisfying: a < b, B < A, and 5 HBW/mm ≤ A/a ≤ 10000 HBW/mm. The ratio of the hardness of the weak region 131 to the thickness of the weak region 131 is set within a reasonable range, so that the weak region 131 has sufficient strength in the normal use process of the battery cell 10, the pressure relief apparatus 13 is not likely to break at the weak region 131, and the service life of the battery cell 10 is prolonged; and the pressure relief apparatus 13 can timely relieve pressure through the weak region 131 at the time of thermal runaway of the battery cell 10, thereby reducing risks of fire and explosion of the battery cell 10 and improving the safety of the battery cell 10.

It is hereby noted that where there is no conflict, the embodiments in this application and the features in the embodiments may be mutually combined.

The foregoing embodiments are merely intended to describe the technical solutions of this application rather than to limit this application. For a person skilled in the art, this application may has various changes and variations. Any modifications, equivalent replacements, improvements, and the like made within the spirit and principles of this application shall fall within the scope of protection of this application.

## Claims

1. A pressure relief apparatus, used for a battery cell, wherein a weak region is locally formed on the pressure relief apparatus, and the weak region is configured to break when the battery cell relieves pressure;
wherein the weak region has a thickness of a and a hardness of A, satisfying: 5 HBW/mm ≤ A/a ≤ 10000 HBW/mm.

2. The pressure relief apparatus according to claim 1, wherein 190 HBW/mm ≤ A/a ≤ 4000 HBW/mm.

3. The pressure relief apparatus according to claim 1 or 2, wherein 8 HBW ≤ A ≤ 200 HBW.

4. The pressure relief apparatus according to any one of claims 1-3, wherein 0.02 mm ≤ a ≤ 1.6 mm.

5. The pressure relief apparatus according to any one of claims 1-4, wherein the pressure relief apparatus comprises a non-weak region, and the non-weak region is connected to a periphery of the weak region and has a thickness of b, satisfying: a < b.

6. The pressure relief apparatus according to claim 5, wherein 0.05 ≤ a/b ≤ 0.95.

7. The pressure relief apparatus according to claim 6, wherein 0.12 ≤ a/b ≤ 0.8.

8. The pressure relief apparatus according to any one of claims 5-7, wherein the non-weak region has a hardness of B, satisfying: B < A.

9. The pressure relief apparatus according to claim 8, wherein A/B ≤ 3.

10. The pressure relief apparatus according to any one of claims 5-9, wherein the non-weak region is directly connected to the weak region.

11. The pressure relief apparatus according to any one of claims 5-9, wherein the pressure relief apparatus is provided with a groove, a connection region is formed on a position of the pressure relief apparatus provided with the groove, the non-weak region is connected to a periphery of the connection region, and the weak region is locally formed on the connection region.

12. The pressure relief apparatus according to any one of claims 5-11, wherein the weak region and the non-weak region are integrally formed.

13. The pressure relief apparatus according to any one of claims 1-12, wherein the pressure relief apparatus comprises a pressure relief portion, the weak region extends along an edge of the pressure relief portion, and the pressure relief portion is configured to open with the weak region as a boundary.

14. The pressure relief apparatus according to any one of claims 1-13, wherein the pressure relief apparatus is provided with a pressure relief groove, and the weak region is formed on a position of the pressure relief apparatus provided with the pressure relief groove.

15. The pressure relief apparatus according to claim 14, wherein an anti-oxidation layer is formed on a surface layer of the pressure relief apparatus, and the anti-oxidation layer is arranged along groove wall faces of the pressure relief groove at a region provided with the pressure relief groove.

16. The pressure relief apparatus according to claim 15, wherein the pressure relief apparatus comprises the non-weak region, the non-weak region is connected to the periphery of the weak region, and the anti-oxidation layer has a thickness of d at the weak region and has a thickness of e at the non-weak region, satisfying: d < e.

17. The pressure relief apparatus according to any one of claims 1-16, wherein the pressure relief apparatus comprises a plurality of walls, the plurality of walls jointly enclose and define an accommodating space, the accommodating space is configured to accommodate an electrode assembly of the battery cell, and the weak region is formed on at least one of the walls.

18. The pressure relief apparatus according to claim 17, wherein the plurality of walls comprise a bottom wall and a plurality of side walls, the plurality of side walls enclose a periphery of the bottom wall, the plurality of side walls and the bottom wall jointly enclose and define the accommodating space, and an opening is formed in an end of the pressure relief apparatus opposite to the bottom wall;
the weak region is formed on the bottom wall; and/or the weak region is formed on at least one of the side walls.

19. The pressure relief apparatus according to any one of claims 1-16, wherein the pressure relief apparatus is of a plate-like structure.

20. A housing, comprising the pressure relief apparatus according to any one of claims 1-19.

21. A battery cell, comprising:
the housing according to claim 20; and
an electrode assembly, the electrode assembly being accommodated in the housing.

22. A battery, comprising:
a box body; and
the battery cell according to claim 21, the battery cell being accommodated in the box body.

23. An electrical device, comprising the battery according to claim 22.
